# EUROPEAN PATENT APPLICATION

(11) **EP 4 391 148 A1**
(43) Date of publication of application: **26.06.2024**
(21) Application number: 23799586.5
(22) Date of filing: 11.04.2023
(51) Int. Cl.: H01M 10/52, H01M 10/058, H01M 10/04, H01M 50/178

(54) **SECONDARY BATTERY**

(30) Priority: 02.05.2022 KR 20220054194
(71) Applicant: LG Energy Solution, Ltd., Seoul 07335 (KR)
(72) Inventor: LIM, Hun-Hee, Daejeon 34122 (KR); KIM, Sang-Hun, Daejeon 34122 (KR); KIM, Mi-Na, Daejeon 34122 (KR); YU, Hyung-Kyun, Daejeon 34122 (KR); LEE, Jae-Ho, Daejeon 34122 (KR)
(74) Representative: Plasseraud IP
(86) International application number: PCT/KR2023/004872
(87) International publication number: WO 2023/214703

(57) **Abstract**

Disclosed is a secondary battery, comprising an electrode assembly; an electrode lead attached to the electrode assembly; a case including a receiving portion in which the electrode assembly is received such that a part of the electrode lead is exposed, and a sealing portion configured to seal up the electrode assembly; and a gas adsorption element disposed in the receiving portion, wherein the gas adsorption element includes a gas adsorption film in which a gas adsorption material is dispersed in a polyolefin matrix resin in a predetermined weight range.

## Description

### TECHNICAL FIELD

The present disclosure relates to a secondary battery, and more particularly, to a secondary battery having a gas adsorption material.

The present application claims the benefit of Korean Patent Application No. 10-2022-0054194 filed on May 2, 2022 with the Korean Intellectual Property Office, the disclosure of which is incorporated herein by reference in its entirety.

### BACKGROUND ART

With the increasing demand and technology development of mobile devices, the demand for secondary batteries as a source of energy is sharply increasing. In particular, secondary batteries are attracting attention as a source of energy of not only mobile devices including mobile phones, digital cameras, laptop computers, wearable devices or the like, but also electric devices including electric bikes, electric vehicles, hybrid electric vehicles or the like.

The secondary batteries are classified into cylindrical batteries and prismatic batteries in which an electrode assembly is included in a cylindrical or prismatic metal can, and pouch-type batteries in which an electrode assembly is included in a pouch-type case of an aluminum laminate sheet, according to the shape of the battery case. Here, the electrode assembly included in the battery case generates power by charging and discharging, and includes a positive electrode, a negative electrode, and a separator interposed between the positive electrode and the negative electrode. The electrode assembly is classified into a jelly-roll type electrode assembly in which a long sheet type positive electrode and a long sheet type negative electrode, each coated with an active material are wound with a separator interposed between them, and a stack type electrode assembly in which a plurality of positive electrodes and a plurality of negative electrodes are stacked in a sequential order with a separator interposed between them.

Among them, there is a gradual rise in the use of the pouch-type battery having the structure in which the stack type or stack/folding type electrode assembly is included in the pouch-type battery case of the aluminum laminate sheet due to low manufacturing cost, small weight and easy-to-deform.

Recently, as the energy density of the battery cell increases, an amount of gas generated in the battery cell also increases.

When the amount of gas generated in the battery cell increases, the pressure in the battery increases, causing deformation or damage to the battery case. Additionally, it is known that the performance degradation of the battery is accelerated by gas.

Accordingly, the battery is equipped with a safety device that operates to vent gas generated in the battery at or above a predetermined pressure, and when the safety device works due to the pressure rise in the battery, electrolyte leaks occur together with gas venting, causing adverse impacts on electronic devices, for example, shorter life of the battery.

To solve the problem, suggestions have been made to include a gas adsorption element comprising a gas adsorption material in the battery cell to adsorb gas generated in the battery cell.

For example, Korean Patent Publication No. 10-2015-0014668 discloses a battery in which a gas adsorption element including a porous substrate containing a gas adsorption material is disposed in a battery cell. In the prior art document, the gas adsorption material is disposed in pores in foamed synthetic resin. Additionally, Japanese Patent Publication No. 2003-77549 discloses a method for manufacturing a gas adsorption element comprising sintering a mixture of gas adsorption material particles and lyophobic material particles for a nonaqueous solvent or spraying and drying a dispersion in which the mixture is dispersed in a dispersion medium, to form gas passages between the lyophobic material particles or between the lyophobic material particles and the gas adsorption material particles.

However, the gas adsorption elements of the prior art documents are manufactured by complex methods and have adverse impacts on battery performance due to reactions with electrolyte solutions over time. Accordingly, there is a need for the development of gas adsorption elements for suppressing reactivity towards electrolyte solutions.

### DISCLOSURE

### Technical Problem

Therefore, an embodiment of the present disclosure is directed to providing a secondary battery having a gas adsorption element for stably absorbing gas generated in the secondary battery for a long time and suppressing reaction with an electrolyte solution.

In addition to the foregoing, another embodiment of the present disclosure is directed to providing a secondary battery having a gas adsorption element that may be securely fixed in the battery.

### Technical Solution

To solve the above-described problem, according to an aspect of the present disclosure, there is provided a secondary battery of the following embodiments.

A first embodiment provides the secondary battery comprising an electrode assembly; an electrolyte solution infiltrated in the electrode assembly; an electrode lead attached to the electrode assembly; a case including a receiving portion in which the electrode assembly is received such that a part of the electrode lead is exposed, and a sealing portion configured to seal up the electrode assembly; and a gas adsorption element disposed in the receiving portion, wherein the gas adsorption element includes a gas adsorption film in which a gas adsorption material is dispersed in a polyolefin matrix resin, and a weight ratio of the gas adsorption material and the polyolefin matrix resin is 20:80 to 50:50.

A second embodiment provides the secondary battery, comprising an electrode assembly; an electrolyte solution infiltrated in the electrode assembly; an electrode lead attached to the electrode assembly; a case including a receiving portion in which the electrode assembly is received such that a part of the electrode lead is exposed, and a sealing portion configured to seal up the electrode assembly; and a gas adsorption element disposed in the receiving portion, wherein the gas adsorption element includes a gas adsorption film in which a gas adsorption material is dispersed in a polyolefin matrix resin and a polyolefin resin film stacked on each of two surfaces of the gas adsorption film, and a weight ratio of the gas adsorption material and the polyolefin matrix resin included in the gas adsorption film is 20:80 to 60:40.

According to a third embodiment, in the first or second embodiment, the gas adsorption film may be formed by extruding a mixture in which the gas adsorption material is dispersed in the molten polyolefin matrix resin.

According to a fourth embodiment, in the second or third embodiment, the gas adsorption film and the polyolefin resin film stacked on each of the two surfaces of the gas adsorption film may be formed by co-extruding a mixture in which the gas adsorption material is dispersed in the molten polyolefin matrix resin and a polyolefin resin melt on two surfaces of the mixture.

According to a fifth embodiment, in any one of the first to fourth embodiments, the gas adsorption element may be adhered to a top or bottom of the electrode assembly or both the top and bottom of the electrode assembly in a stack direction of the electrode assembly.

According to a sixth embodiment, in the fifth embodiment, the adhesion of the gas adsorption element may be thermal adhesion by heating of the gas adsorption element.

According to a seventh embodiment, in any one of the first to fourth embodiments, the gas adsorption element may be adhered to an inner surface of the receiving portion.

According to an eighth embodiment, in the seventh embodiment, the adhesion of the gas adsorption element may be thermal adhesion by heating of the gas adsorption element.

According to a ninth embodiment, in any one of the first to eighth embodiments, the gas adsorption element may be 50 to 300 *µ*m in thickness.

According to a tenth embodiment, in any one of the second to ninth embodiments, a thickness of the polyolefin resin film may be 5 to 50 *µ*m based on the thickness of the polyolefin resin film stacked on one surface of the gas adsorption film.

According to an eleventh embodiment, in any one of the first to tenth embodiments, each of the polyolefin matrix resin and the polyolefin resin may be, independently, a polyethylene, a polypropylene or a mixture of the polyethylene and the polypropylene.

According to a twelfth embodiment, in any one of the first to eleventh embodiments, the gas adsorption material may comprise at least one of carbon-based materials, ceramics, Metal Organic Framework (MOF) or ammonium-based organics.

According to a thirteenth embodiment, in any one of the first to twelfth embodiments, the gas adsorption material may adsorb carbon dioxide.

According to a fourteenth embodiment, in any one of the first to thirteenth embodiments, the secondary battery may be a lithium secondary battery.

### Advantageous Effects

The secondary battery according to an embodiment of the present disclosure is equipped with the gas adsorption element including the gas adsorption film in which the gas adsorption material is dispersed in the polyolefin matrix resin at a predetermined weight ratio, thereby stably absorbing gas generated in the secondary battery for a long time and suppressing the reaction with the electrolyte solution. Accordingly, it may be possible to prevent the performance degradation of the battery caused by the reaction of the gas adsorption element with the electrolyte solution when the battery is used for a long time.

Additionally, since the gas adsorption element according to the present disclosure easily adheres by heat, the gas adsorption element may be easily adhered to the top or bottom of the electrode assembly or the inner surface of the battery receiving portion and thus may be securely fixed to the battery.

The above-described effects of the present disclosure may be exhibited more greatly when using the gas adsorption element including the gas adsorption film in which the gas adsorption material is dispersed in the polyolefin matrix resin and the polyolefin resin film stacked on each of the two surfaces of the gas adsorption film according to an embodiment of the present disclosure.

### DESCRIPTION OF DRAWINGS

The accompanying drawings illustrate exemplary embodiments of the present disclosure and together with the foregoing disclosure, serve to provide further understanding of the technical aspect of the present disclosure, and thus the present disclosure should not be construed as being limited to the drawings.
FIG. 1 is a partial cut-away perspective view schematically showing a secondary battery according to an embodiment of the present disclosure.
FIG. 2 is a cross-sectional view of FIG. 1.
FIG. 3 is a cross-sectional view schematically showing a gas adsorption element according to an embodiment of the present disclosure.
FIG. 4 is a cross-sectional view schematically showing a gas adsorption element according to another embodiment of the present disclosure.

### BEST MODE

Hereinafter, exemplary embodiments of the present disclosure will be described in detail with reference to the accompanying drawings. Prior to the description, it should be understood that the terms or words used in the specification and the appended claims should not be construed as limited to general and dictionary meanings, and should be interpreted based on the meanings and concepts corresponding to technical aspect of the present disclosure on the basis of the principle that the inventor is allowed to define terms appropriately for the best explanation.

Therefore, the embodiment described herein and illustration shown in the drawings is provided to describe an exemplary embodiment of the present disclosure, but not intended to fully describe the technical aspect of the present disclosure, so it should be understood that a variety of other equivalents and modifications could have been made thereto at the time that the application was filed.

A secondary battery according to an aspect of the present disclosure comprises an electrode assembly; an electrolyte solution infiltrated in the electrode assembly; an electrode lead attached to the electrode assembly; a case including a receiving portion in which the electrode assembly is received such that a part of the electrode lead is exposed, and a sealing portion configured to seal up the electrode assembly; and a gas adsorption element disposed in the receiving portion, wherein the gas adsorption element includes a gas adsorption film in which a gas adsorption material is dispersed in a polyolefin matrix resin, and a weight ratio of the gas adsorption material and the polyolefin matrix resin is 20:80 to 50:50.

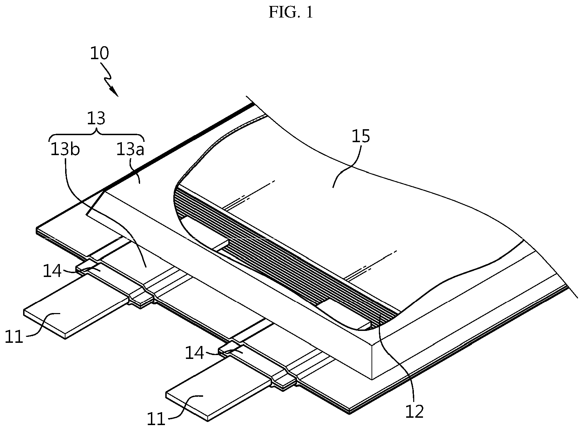

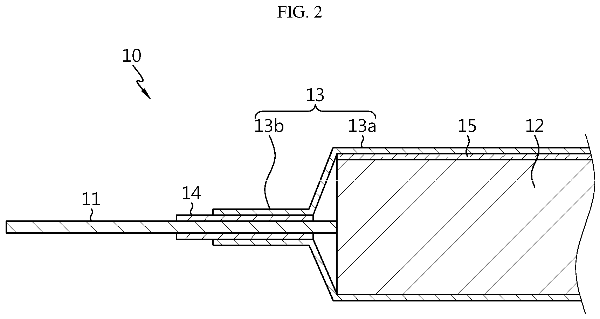

FIG. 1 is a partial cut-away perspective view schematically showing a secondary battery according to an embodiment of the present disclosure, and FIG. 2 is a cross-sectional view of FIG. 1.

Referring to FIG. 1, the secondary battery 10 includes an electrode assembly 12 to which an electrode lead 11 is attached, and a case 13.

The electrode assembly 12 may comprise a positive electrode plate, a negative electrode plate and a separator well-known in the technical field. In the electrode assembly 12, the positive electrode plate and the negative electrode plate may be stacked in that order with the separator interposed between.

The positive electrode plate may comprise a positive electrode current collector of a metal foil having high conductivity, and a positive electrode active material layer coated on at least one surface of the positive electrode current collector.

The positive electrode current collector is not limited to a particular type and may include those having conductive properties without causing any chemical change to the battery, for example, stainless steel, aluminum, nickel, titanium, sintered carbon or aluminum or stainless steel treated with carbon, nickel, titanium or silver on the surface. Especially, the positive electrode current collector of an aluminum foil may be used. Additionally, the positive electrode current collector may be typically 3 to 500 *µ*m in thickness, and may have microtexture on the surface to increase the adhesion strength of the positive electrode active material. For example, the positive electrode current collector may come in various forms, for example, a film, a sheet, a foil, a net, a porous body, a foam and a nonwoven.

The positive electrode active material layer may comprise the positive electrode active material, a conductive material and a binder well-known in the technical field.

The positive electrode active material may include layered compounds such as lithium cobalt oxide (LiCoO₂) and lithium nickel oxide (LiNiO₂) or compounds with one or more transition metal substitution; lithium manganese oxide such as formula Li₁₊ₓMn₂₋ₓO₄ (where x is 0 to 0.33), LiMnO₃, LiMn₂O₃, LiMnO₂; lithium copper oxide (Li₂CuO₂); vanadium oxide such as LiVaOs, V₂O₅, Cu₂V₂O₇; Ni-site type lithium nickel oxide represented by formula LiNi₁₋ₓMₓO₂ (where M = Co, Mn, Al, Cu, Fe, Mg, B or Ga, x = 0.01 to 0.3); lithium manganese composite oxide represented by formula LiMn₂₋ₓMₓO₂ (where M = Co, Ni, Fe, Cr, Zn or Ta, x = 0.01 to 0.1) or Li₂Mn₃MO₈ (where M = Fe, Co, Ni, Cu or Zn); LiMn₂O₄ with partial substitution of alkali earth metal ions for Li in the formula; disulfide compounds; Fe₂(MoO₄)₃, but is not limited thereto.

The conductive material is used to give conductive properties to the electrode, and may include, without limitation, any material having the ability to conduct electrons without causing any chemical change to the battery. Specific examples may include at least one of graphite such as natural graphite or artificial graphite; carbon-based materials such as carbon black, acetylene black, ketjen black, channel black, furnace black, lamp black, thermal black, carbon fibers; metal powder or metal fibers such as copper, nickel, aluminum, silver; conductive whiskers such as zinc oxide, potassium titanate; conductive metal oxide such as titanium oxide; or conductive polymer such as polyphenylene derivatives. The conductive material may be typically included in an amount of 1 to 30 wt% based on the total weight of the positive electrode active material layer.

The binder plays a role in attaching the positive electrode active material particles to each other and improving the adhesion strength between the positive electrode active material and the positive electrode current collector. Specific examples may include at least one of polyvinylidene fluoride (PVDF), a vinylidene fluoride-hexafluoropropylene copolymer (PVDF-co-HFP), polyvinylalcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene-butadiene rubber (SBR), fluoro rubber or a variety of copolymers thereof. The binder may be included in an amount of 1 to 30 wt% based on the total weight of the positive electrode active material layer.

The positive electrode plate may be manufactured by commonly used methods for manufacturing positive electrode plates. Specifically, the positive electrode plate may be manufactured by coating a positive electrode active material layer forming composition comprising the positive electrode active material, and optionally, the binder and the conductive material on the positive electrode current collector, followed by drying and rolling. In this instance, the type and amount of the positive electrode active material, the binder and the conductive material are the same as described above. Alternatively, the positive electrode plate may be manufactured by casting the positive electrode active material layer forming composition on a support, peeling off a film from the support and laminating the film onto the positive electrode current collector.

Additionally, the positive electrode plate may comprise a positive electrode tab made of a metal, for example, aluminum (Al) at an end. The positive electrode tab may protrude from the end of the positive electrode plate. The positive electrode tab may be attached to the end of the positive electrode plate by welding or using a conductive adhesive.

The negative electrode plate may comprise a negative electrode current collector of a conductive metal foil, and a negative electrode active material layer coated on at least one surface of the negative electrode current collector.

The negative electrode current collector is not limited to a particular type and may include those having high conductivity without causing any chemical change to the battery, for example, copper, stainless steel, aluminum, nickel, titanium, sintered carbon, copper or stainless steel treated with carbon, nickel, titanium or silver on the surface, and an aluminum-cadmium alloy. Especially, a copper foil may be used. Additionally, the negative electrode current collector may be typically 3 to 500 *µ*m in thickness, and in the same way as the positive electrode current collector, may have microtexture on the surface to enhance the bonding strength of the negative electrode active material. For example, the negative electrode current collector may come in various forms, for example, a film, a sheet, a foil, a net, a porous body, a foam and a nonwoven.

The negative electrode active material layer comprises the negative electrode active material and optionally a binder and a conductive material. The negative electrode active material layer may be, for example, formed by coating a negative electrode forming composition comprising the negative electrode active material, and optionally, the binder and the conductive material on the negative electrode current collector and drying it, or may be formed by casting the negative electrode forming composition on a support, peeling off a film from the support and laminating the film onto the negative electrode current collector.

The negative electrode active material may include any compound capable of reversible intercalation or deintercalation of lithium. Specific examples may include at least one of carbonaceous materials such as artificial graphite, natural graphite, graphitizing carbon fibers, amorphous carbon; metallic materials that can be alloyed with lithium such as Si, Al, Sn, Pb, Zn, Bi, In, Mg, Ga, Cd, Si alloys, Sn alloys or Al alloys; metal oxide capable of doping and dedoping lithium such as SiO_{β} (0 < β < 2), SnO₂, vanadium oxide, lithium vanadium oxide; or composites comprising the metallic materials and the carbonaceous materials such as Si-C composites or Sn-C composites. Additionally, a metal lithium foil may be used as the negative electrode active material. Additionally, the carbon materials may include low crystallinity carbon and high crystallinity carbon. The low crystallinity carbon typically includes soft carbon and hard carbon, and the high crystallinity carbon may typically include high temperature sintered carbon such as amorphous, platy, flaky, spherical or fibrous natural graphite or artificial graphite, Kish graphite, pyrolytic carbon, mesophase pitch based carbon fiber, meso-carbon microbeads, mesophase pitches and petroleum or coal tar pitch derived cokes. For the binder and the conductive material, the binder and the conductive material described above in the positive electrode active material may be used.

Additionally, the negative electrode plate may comprise a negative electrode tab made of a metal, for example, nickel (Ni) at an end. The negative electrode tab may protrude from the end of the negative electrode plate. The negative electrode tab may be attached to the end of the negative electrode plate by welding or using a conductive adhesive.

The separator is disposed between the positive electrode plate and the negative electrode plate to electrically insulate the positive electrode plate from the negative electrode plate. The separator may be a porous membrane that allows lithium ions to pass through between the positive electrode plate and the negative electrode plate, and for example, a polyolefin porous membrane using polyethylene (PE), polypropylene (PP) or a composite film thereof. The separator may have a coating layer comprising polymer and inorganic particles on the surface to improve the safety of the battery. The inorganic coating layer may have a structure in which the inorganic particles are connected and bound by the binder to form pores between the inorganic particles.

The electrode assembly 12 may include a jelly-roll (wound) type electrode assembly having a structure in which a long sheet type positive electrode plate and a long sheet type negative electrode plate are wound with a separator interposed between them, a stack type electrode assembly having a structure in which a plurality of positive electrode plates and a plurality of negative electrode plates cut into a predetermined size are stacked in a sequential order with a separator interposed between them, and a stack/folding type electrode assembly having a structure in which bi-cells or full cells are wound, each cell including a predetermined unit of positive electrode plates and negative electrode plates stacked with a separator interposed between them.

The electrode assembly 12 is received in the case 13.

In an embodiment of the present disclosure, as shown in FIGS. 1 and 2, the case 13 may include the receiving portion 13a in which the electrode assembly 12 is received, and a sealing portion 13b on the outer peripheral surface of the receiving portion 13 to seal up the electrode assembly 12.

The sealing portion 13b may comprise a sealant resin, and the sealant resin included in the sealing portion may seal up the electrode assembly 12 when it melts along the outer peripheral surface of the receiving portion 13a.

In an embodiment of the present disclosure, the case 13 may be in a form of a multilayer structured film including an outer layer to protect from external impacts, a metal barrier layer to block water, and a sealant layer to seal up the case.

The outer layer may comprise a polyester-based film using poly(ethylene terephthalate) (PET), polybutyleneterephthalate, polyethylenenaphthalate, polybutylenenaphthalate, copolymerized polyester, polycarbonate and nylon, and may be formed as a single layer or a multilayer.

The metal barrier layer may comprise aluminum and copper.

The sealant layer may comprise a sealant resin, and may be formed as a single layer or a multilayer.

The sealant resin may comprise at least one of polypropylene (PP), acid modified polypropylene (PPa), random polypropylene or an ethylene propylene copolymer. The ethylene propylene copolymer may comprise ethylene-propylene rubber and an ethylene-propylene block copolymer, but is not limited thereto.

In an embodiment of the present disclosure, the case 13 may be a pouch type.

The pouch type case 13 may comprise an upper pouch and a lower pouch. When the case 13 comprises the upper pouch and the lower pouch, after the upper pouch and the lower pouch are placed such that the sealant resins face each other, the battery may be sealed up when the sealant resins facing each other melt by heat and pressure.

Any method may be used to weld the sealing portion 13b, and may include, for example, heat welding and ultrasonic welding, but is not limited thereto.

In some embodiments, the sealing portion 13b may be sealed by four-side sealing or three-side sealing on the edge of the case 13. In the three-side sealing structure, after the upper pouch and the lower pouch are formed in one pouch sheet, the receiving portions 13a of the upper pouch and the lower pouch are placed one over another by bending the boundary of the upper pouch and the lower pouch, and then the three remaining edges except the bent portion are sealed up.

As shown in FIGS. 1 and 2, the electrode lead 11 is attached to the electrode assembly 12. The electrode lead 11 may be received in the case 13 such that a part of the electrode lead is exposed through the case 13.

According to an embodiment of the present disclosure, a lead film 14 may cover a part of the outer surface of the electrode lead 11, and may be interposed between the electrode lead 11 and the case 13. For example, the lead film 14 may be interposed between the electrode lead 11 and the sealing portion 13b of the case 13 of a portion of the electrode lead 11 protruded or extended from the case 13 to help the bonding of the electrode lead 11 and the case 13.

As described above, the electrode assembly 12 received in the case 13 is wet in an electrolyte solution. Specifically, the electrolyte solution may be a nonaqueous electrolyte solution comprising an organic solvent and a lithium salt.

The organic solvent may include, without limitation, any type of organic solvent that may act as a medium for the movement of ions involved in the electrochemical reaction of the battery. Specifically, the organic solvent may include an ester-based solvent such as methyl acetate, ethyl acetate, γ-butyrolactone, ε-caprolactone; an ether-based solvent such as dibutyl ether or tetrahydrofuran; a ketone-based solvent such as cyclohexanone; an aromatic hydrocarbon-based solvent such as benzene, fluorobenzene; a carbonate-based solvent such as dimethyl carbonate (DMC), diethyl carbonate (DEC), ethylmethyl carbonate (EMC), ethylene carbonate (EC), propylene carbonate (PC); an alcohol-based solvent such as ethyl alcohol, isopropyl alcohol; nitriles such as R-CN (R is C2-C20 straight-chain, branched-chain or cyclic hydrocarbon, and may comprise an exocyclic double bond or ether bond); amides such as dimethylformamide; dioxolanes such as 1,3-dioxolane; or sulfolanes. Among them, the carbonate-based solvent is preferred, and more preferably, a cyclic carbonate (for example, ethylene carbonate or propylene carbonate) having high ionic conductivity and high dielectric constant that contributes to improved charge and discharge performance of the battery may be mixed with a linear carbonate-based compound (for example, ethylmethyl carbonate, dimethyl carbonate or diethyl carbonate) having low viscosity. In this case, the cyclic carbonate and the chain carbonate may be mixed at a volume ratio of about 1:1 to about 1:9 to improve the performance of the electrolyte solution.

The lithium salt may include, for example, any compound that provides lithium ions used in lithium secondary batteries without limitation. Specifically, the lithium salt may include LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI, or LiB(C₂O₄)₂. The concentration of the lithium salt may be in a range between 0.1 and 2.0 M. When the concentration of the lithium salt is included in the above-described range, the electrolyte may have proper conductivity and viscosity and exhibit the outstanding electrolyte performance, thereby effective transport lithium ions.

In addition to the above-described constituent materials, the electrolyte solution may further comprise an additive to improve the life characteristics of the battery, prevent the capacity fading of the battery and improve the discharge capacity of the battery, and the additive may include, for example, at least one of a haloalkylene carbonate-based compound such as difluoro ethylene carbonate, pyridine, triethylphosphite, triethanolamine, cyclic ether, ethylene diamine, n-glyme, hexamethylphosphoric triamide, nitrobenzene derivatives, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride. In this instance, the additive may be included in an amount of 0.1 to 5 wt% based on the total weight of the electrolyte.

The secondary battery may be especially a lithium secondary battery, and may be widely used in the field of mobile devices such as mobile phones, laptop computers and digital cameras, and electric vehicles such as hybrid electric vehicles (HEV).

Meanwhile, as shown in FIGS. 1 and 2, the gas adsorption element 15 is included in the receiving portion 13a of the case 13.

The gas adsorption element 15 includes the gas adsorption film in which the gas adsorption material is dispersed in the polyolefin matrix resin.

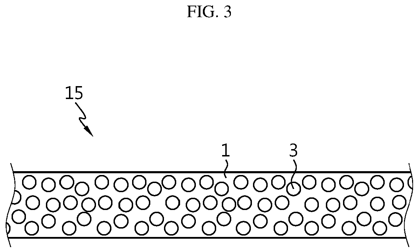

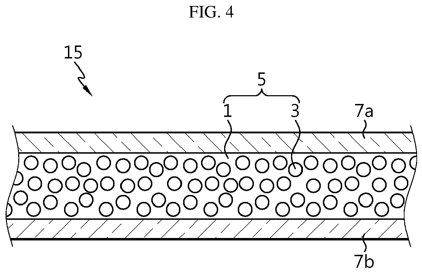

FIG. 3 is a cross-sectional view schematically showing the gas adsorption element including the gas adsorption film according to an embodiment of the present disclosure, and FIG. 4 is a cross-sectional view schematically showing the gas adsorption element according to another embodiment of the present disclosure.

Referring to FIG. 3, the gas adsorption element 15 is in a form of a film in which the polyolefin matrix resin is used as a basic substrate, and the gas adsorption material 3 is dispersed in the polyolefin matrix resin 1.

The gas adsorption material 3 may comprise at least one of carbon-based materials, ceramics, Metal Organic Framework (MOF) or ammonium-based organics. The gas adsorption material 3 may be selected from materials that particularly adsorb carbon dioxide well. The gas adsorption material 3 may adsorb carbon dioxide as well as methane or ethane.

The carbon-based materials may comprise at least one of carbon fibers, activated carbon, porous carbon or graphene. The ceramics may comprise at least one of silica, alumina or zeolite.

In an embodiment of the present disclosure, the amount of the gas adsorption material 3 may be 0.1 g/Ah to 0.10 g/Ah based on the battery capacity. When the amount of the gas adsorption material 3 satisfies the above-described range, it may be easier to adsorb gas generated in the secondary battery to prevent venting.

As described above, it is necessary to suppress reaction of the gas adsorption element 15 with the electrolyte solution to reduce the adverse impacts on battery performance. Since the gas adsorption material 3 included in the gas adsorption element 15 reacts with the electrolyte solution over time, which adversely affects the battery performance, the present disclosure solves the problem by dispersing the gas adsorption material 3 in the polyolefin matrix resin 1 having low reactivity towards the electrolyte solution.

In this aspect, the weight ratio of the gas adsorption material 3 and the polyolefin matrix resin 1 in the gas adsorption element 15 of FIG. 3 is 20:80 to 50:50. When the weight ratio of the polyolefin matrix resin 1 to the gas adsorption material 3 is larger than the defined ratio, the gas adsorption efficiency is low, and when the weight ratio of the polyolefin matrix resin 1 to the gas adsorption material 3 is less than the defined ratio, it may be difficult to maintain the film shape well and the reactivity of the gas adsorption element 15 towards the electrolyte solution may be high.

As described above, as the gas adsorption element 15 includes the gas adsorption film in which the gas adsorption material 3 is dispersed in the polyolefin matrix resin 1 at the predetermined weight ratio, it may be possible to stably absorb gas generated in the secondary battery for a long time and suppress the reaction with the electrolyte solution. Accordingly, it may be possible to prevent the performance degradation of the battery caused by the reaction of the gas adsorption element 15 with the electrolyte solution when the battery is used for a long time.

The polyolefin matrix resin may include polyethylene, polypropylene or a mixture of polyethylene and polypropylene, but is not limited thereto.

As shown in FIG. 4, the gas adsorption element 15 may include the gas adsorption film 5 in which the gas adsorption material 3 is dispersed in the polyolefin matrix resin 1 and polyolefin resin films 7a, 7b stacked respectively on two surfaces of the gas adsorption film 5. The polyolefin resin films 7a, 7b stacked respectively on the two surfaces of the gas adsorption film 5 may prevent the contact of the gas adsorption material 3 with the electrolyte solution, thereby suppressing the reaction of the gas adsorption element 15 with the electrolyte solution. In the gas adsorption element 15 of the 3-layer structure, the weight ratio of the gas adsorption material and the polyolefin matrix resin included in the gas adsorption film is 20:80 to 60:40. When the weight ratio of the polyolefin matrix resin 1 to the gas adsorption material 3 is larger than the defined ratio, the gas adsorption efficiency is low, and when the weight ratio of the polyolefin matrix resin 1 to the gas adsorption material 3 is less than the defined ratio, it is not easy to form a film of Fig. 4.

The gas adsorption element 15 of FIGS. 3 and 4 may be 50 to 300 *µ*m in thickness, and the thickness of the polyolefin resin films 7a, 7b of the gas adsorption element 15 of FIG. 4 may be 5 to 50 *µ*m, and more specifically 10 to 50 *µ*m based on the thickness of the polyolefin resin film stacked on one surface of the gas adsorption film.

The polyolefin matrix resin 1 and the polyolefin resin of the polyolefin resin films 7a, 7b in the gas adsorption element 15 of FIG. 4 may be, independently, polyethylene, polypropylene or a mixture of polyethylene and polypropylene.

The gas adsorption film of the gas adsorption element 15 of each of FIGS. 3 and 4 may be formed by extruding the mixture in which the gas adsorption material is dispersed in the molten polyolefin matrix resin. That is, the gas adsorption film may be, for example, formed by feeding the polyolefin matrix resin and the gas adsorption material into an extruder equipped with a T-die, heating at higher temperature than the polyolefin matrix resin, mixing and extruding. The gas adsorption element 15 of the 3-layer structure according to FIG. 4 may be manufactured by co-extruding the mixture in which the gas adsorption material is dispersed in the molten polyolefin matrix resin and the polyolefin resin melt on two surfaces of the mixture. Alternatively, the gas adsorption element may be manufactured by making each of the gas adsorption film and the polyolefin resin film by extrusion, stacking the polyolefin resin film on each of two surfaces of the gas adsorption film and adhering them by an adhesive or heating.

The gas adsorption element may be disposed at any location in the receiving portion of the case, but may be adhered to the top or bottom of the electrode assembly or both the top and bottom of the electrode assembly in the stack direction of the electrode assembly, or may be adhered to the inner surface of the receiving portion. As described above, when the gas adsorption element is disposed, the gas adsorption element may be included in the secondary battery without design modification to the case, and it may be possible to minimize the decline in energy density of the secondary battery due to the gas adsorption element.

Since the surface of the gas adsorption element is made of the polyolefin resin as the basic material, the adhesion of the gas adsorption element to the electrode assembly or the inner surface of the receiving portion may be easily accomplished by heating the gas adsorption element. In particular, when the polyolefin separator is disposed on the outer surface of the electrode assembly, it may be easier to thermally adhere the gas adsorption element made of the polyolefin resin. When the inner surface of the receiving portion also comprises the polyolefin resin, it may be easier to thermally adhere the gas adsorption element made of the polyolefin resin. Accordingly, the gas adsorption element may be securely fixed to the battery.

In an embodiment of the present disclosure, the amount of the gas adsorption material 3 may be 0.1 g/Ah to 0.10 g/Ah based on the battery capacity. When the amount of the gas adsorption material 15 satisfies the above-described range, it may be easier to adsorb gas generated in the secondary battery to prevent venting.

The thickness of the gas adsorption material 15 may be set to allow 1 g of the gas adsorption material 15 to adsorb 100 cc of gas. For example, the thickness of the gas adsorption material 15 may be 50 to 300 *µ*m. When the thickness of the gas adsorption material 15 satisfies the above-described range, it may be easier to allow the gas adsorption material 15 to adsorb gas generated in the secondary battery to prevent venting.

Hereinafter, the embodiments of the present disclosure will be described in sufficient detail for those skilled in the art to easily carry out. However, the present disclosure may be realized in many different forms and is not limited to the disclosed embodiment.

### Comparative example 1

1 g of polyethyleneimine which is an amine-based compound as a gas adsorption material was put into a 100 ml beaker, and the gas adsorption amount, adsorption efficiency, electrolyte solution reactivity and thermal adhesion were measured. The measurements are shown in the following Table 1.

### Example 1-1

Each of the gas adsorption material used in comparative example 1 and polypropylene as a polyolefin matrix resin was fed into an extruder at a weight ratio of 20:80, followed by heating at the temperature that is equal to or higher than the melting point of the polypropylene, compounding, and extrusion through a T die to manufacture a 100 *µ*m thick gas adsorption film.

### Example 1-2

A gas adsorption film was manufactured in the same way as example 1-2 except that the weight ratio of the gas adsorption material and the polypropylene matrix resin was adjusted to 30:70.

### Example 1-3

A gas adsorption film was manufactured in the same way as example 1-1 except that the weight ratio of the gas adsorption material and the polypropylene matrix resin was adjusted to 50:50.

### Example 2-1

Each of the gas adsorption material used in comparative example 1 and polypropylene as polyolefin matrix resin was fed into an extruder at a weight ratio of 50:50 and heated at the temperature that is equal to or higher than the melting point of the polypropylene, followed by compounding, and then the polypropylene was fed into each of two sheaths of the extruder, heated at the temperature that is equal to or higher than the melting point of the polypropylene, and co-extruded through a T die to manufacture a gas adsorption element of a 3-layer structure in which a 10 ,um thick polypropylene film is stacked on each of two surfaces of a gas adsorption film having a 80 *µ*m thick core.

**[Table 1]**

| | Gas adsorption amount | | | Adsorption efficiency (%) | | Electrolyte solution reactivity | Thermal adhesion |
|---|---|---|---|---|---|---|---|
| | Theoretic al value (cc/g) | Experimental value (cc/g) | | | | | |
| | | 24 hr | 240 hr | 24 hr | 240 hr | CV test peak | |
| Comparative example 1 | 75 | 70 | 75 | 93.3 | 100 | ○ | X |
| Example 1-1 | 15 | 11 | 15 | 73.3 | 100 | X | ○ |
| Example 1-2 | 23 | 19 | 23 | 82.6 | 100 | X | ○ |
| Example 1-3 | 38 | 35 | 38 | 92.1 | 100 | X | ○ |
| Example 2-1 | 30 | 27 | 30 | 90.0 | 100 | X | ○ |

The properties in the above Table 1 were measured by the following method.

### [Gas adsorption amount]

Theoretical value: was found by calculating an amount that theoretically the gas adsorption material can adsorb.

Experimental value: a 4 side sealed pouch for a battery, comprising a gas adsorption material or an adsorption element type film, was connected to a tube with a connected MFC and CO₂ gas was fed at a constant speed (50 cc/min.) until the internal pressure reaches 0.5 atm (atmospheric pressure). When the corresponding pressure is reached, after turning off a valve, storage for the predetermined time with a valve off and connecting the tube again, the amount of CO₂ gas additionally fed until the internal pressure reaches 0.5 atm was calculated as a gas adsorption amount according to an experimental value.

Adsorption efficiency: was calculated by dividing the adsorption amount calculated from the experimental value by the theoretical adsorption amount.

### [Electrolyte solution reactivity]

10 ml of an electrolyte solution in which 1.2M LiPF₆ is dissolved in a solvent containing 20 / 10 / 25 / 45 vol% of EC / PC / EP / PP was put into a 30 ml beaker together with 0.5g of the gas adsorption material, and an oxidation/reduction reaction test in a range between 1.0 and 5.0V was performed using Pt Prove as the electrode.

After comparing with a Blank sample containing none other than the electrolyte solution, reactivity was evaluated based on the presence or absence of additional oxidation/reduction reaction as follows.
∘: No change in color of the electrolyte solution
X: Color change of the electrolyte solution to brown

### [Thermal adhesion]

Each gas adsorption element of example and comparative example was stacked on a 100 *µ*m thick polyethylene film, pressed down at 180°C under the pressure of 0.5 MPa for 10 seconds using a hot press and tailored into the width of 1 cm. A 180° peel test was performed by peeling the gas adsorption element from the tailored sample with a force of 5 N/cm, and in case that the gas adsorption element is not peeled off, o was marked, and in case that the gas adsorption element is peeled off, X was marked.

Referring to the data in Table 1, the gas adsorption element of comparative example 1 has high reactivity with the electrolyte solution. In contrast, it was confirmed that the gas adsorption elements of examples showed the gas adsorption amount corresponding to the theoretical value during a long-term use and had low reactivity with the electrolyte solution. Further, the gas adsorption elements of examples exhibited good thermal adhesion.

### [Description of Reference Numerals]

1: Polyolefin matrix resin
3: Gas adsorption material
5: Gas adsorption film
7a, 7b: Polyolefin resin film
10: Secondary battery
11: Electrode lead
12: Electrode assembly
13: Case
13a: Receiving portion
13b: Sealing portion
14: Lead film
15: Gas adsorption element

## Claims

1. A secondary battery, comprising:
an electrode assembly;
an electrolyte solution infiltrated in the electrode assembly;
an electrode lead attached to the electrode assembly;
a case including a receiving portion in which the electrode assembly is received such that a part of the electrode lead is exposed, and a sealing portion configured to seal up the electrode assembly; and
a gas adsorption element disposed in the receiving portion,
wherein the gas adsorption element includes a gas adsorption film in which a gas adsorption material is dispersed in a polyolefin matrix resin, and
wherein a weight ratio of the gas adsorption material and the polyolefin matrix resin is 20:80 to 50:50.

2. A secondary battery, comprising:
an electrode assembly;
an electrolyte solution infiltrated in the electrode assembly;
an electrode lead attached to the electrode assembly;
a case including a receiving portion in which the electrode assembly is received such that a part of the electrode lead is exposed, and a sealing portion configured to seal up the electrode assembly; and
a gas adsorption element disposed in the receiving portion,
wherein the gas adsorption element includes a gas adsorption film in which a gas adsorption material is dispersed in a polyolefin matrix resin and a polyolefin resin film stacked on each of two surfaces of the gas adsorption film, and
wherein a weight ratio of the gas adsorption material and the polyolefin matrix resin included in the gas adsorption film is 20:80 to 60:40.

3. The secondary battery according to claim 1 or 2, wherein the gas adsorption film is formed by extruding a mixture in which the gas adsorption material is dispersed in the molten polyolefin matrix resin.

4. The secondary battery according to claim 2, wherein the gas adsorption film and the polyolefin resin film stacked on each of the two surfaces of the gas adsorption film are formed by co-extruding a mixture in which the gas adsorption material is dispersed in the molten polyolefin matrix resin and a polyolefin resin melt on two surfaces of the mixture.

5. The secondary battery according to claim 1 or 2, wherein the gas adsorption element is adhered to a top or bottom of the electrode assembly or both the top and bottom of the electrode assembly in a stack direction of the electrode assembly.

6. The secondary battery according to claim 5, wherein the adhesion of the gas adsorption element is thermal adhesion by heating of the gas adsorption element.

7. The secondary battery according to claim 1 or 2, wherein the gas adsorption element is adhered to an inner surface of the receiving portion.

8. The secondary battery according to claim 7, wherein the adhesion of the gas adsorption element is thermal adhesion by heating of the gas adsorption element.

9. The secondary battery according to claim 1 or 2, wherein the gas adsorption element is 50 to 300 *µ*m in thickness.

10. The secondary battery according to claim 2, wherein a thickness of the polyolefin resin film is 5 to 50 *µ*m based on the thickness of the polyolefin resin film stacked on one surface of the gas adsorption film.

11. The secondary battery according to claim 1 or 2, wherein each of the polyolefin matrix resin and the polyolefin resin is, independently, a polyethylene, a polypropylene or a mixture of the polyethylene and the polypropylene.

12. The secondary battery according to claim 1 or 2, wherein the gas adsorption material comprises at least one of carbon-based materials, ceramic materials, Metal Organic Framework, MOF, or ammonium-based organics.

13. The secondary battery according to claim 1 or 2, wherein the gas adsorption material adsorbs carbon dioxide.

14. The secondary battery according to claim 1 or 2, wherein the secondary battery is a lithium secondary battery.
